# EUROPEAN PATENT APPLICATION

(11) **EP 4 793 748 A1**
(43) Date of publication of application: **19.08.2026**
(21) Application number: 26152908.5
(22) Date of filing: 20.01.2026
(51) Int. Cl.: G06F 3/12

(54) **INFORMATION PROCESSING APPARATUS, IMAGE FORMING APPARATUS, CONTROL METHOD, AND COMPUTER PROGRAM**

(30) Priority: 14.02.2025 JP 2025022643
(71) Applicant: Canon Kabushiki Kaisha, Tokyo 146-8501 (JP)
(72) Inventor: SHIBATA, Daisuke, Tokyo (JP)
(74) Representative: WESER & Kollegen Patentanwälte PartmbB

(57) **Abstract**

An information processing apparatus (102) receives a job history from an image forming apparatus (101) that performs a job to form an image on a recording medium. The job history includes information on a printing job that has been normally completed and information on a related job related to the normally completed printing job. The information processing apparatus (102) includes first and second calculation units (601), an addition unit (361), and a storage unit (363). The first and second calculation units (601) calculate the carbon dioxide emissions generated when the normally completed printing job is performed and the carbon dioxide emissions generated when the related job is performed. The addition unit (361) adds up the amounts calculated by the first and second calculation units (601). The storage unit (363) stores the sum of the amounts as a total amount of carbon dioxide emissions associated with the normally completed printing job.

## Description

### TECHNICAL FIELD

The present disclosure relates to an information processing apparatus, an image forming apparatus, a control method, and a computer program. More particularly, the present disclosure pertains to an information processing apparatus, an image forming apparatus, a control method, and a computer program for calculating an environmental load in producing a printed product.

### BACKGROUND

In recent years, efforts have been made to visualize environmental impacts by calculating the emissions of greenhouse gases, such as carbon dioxide. In the field of image forming apparatuses, printing machines consume electric power and use raw materials such as ink and toner to produce printed materials; therefore, technologies have been developed for calculating the amount of greenhouse gases such as carbon dioxide emitted in this process. For example, Japanese Patent Application Laid-Open No. 2006-021414 discloses a technology in which the amounts of color material, sheets, and electric power used are determined based on document data for image formation and job information that defines the image forming mode, and an environmental load value in the image forming process for printing is calculated from that information.

In the field of commercial and industrial printing, an adjustment process is often performed using the same type of paper as that used for actual printing prior to image formation. However, the calculation of the environmental load value in the above conventional technology does not take this adjustment into account. In addition, in the field of commercial and industrial printing, it is common practice to carry out inspection of the print results, and when a defect is found, the printed matter is discarded without being treated as a finished product. The conventional technology does not take these inspection and disposal processes into account in calculating the environmental load value.

In other words, in the conventional technology, the amounts of color material, sheets, and electric power used during the adjustment process or in image formation that results in discarded printed matter are not included in the calculation of the environmental load value related to product creation, and therefore a highly accurate environmental load value cannot be obtained.

### SUMMARY

Embodiments described herein are directed to technology capable of calculating the amount of carbon dioxide emissions with high accuracy, based on all work information required to obtain a printed product using an image forming apparatus.

The present disclosure in its first aspect provides an information processing apparatus as specified in claim 1. Optional features are specified in claims 2 to 10. These preferable features of the first aspect are also preferable features of the other aspects of the present invention.

The present disclosure in its second aspect provides an image forming apparatus as specified in claim 11.

The present disclosure in its third aspect provides a control method for an information processing apparatus as specified in claim 12.

The present disclosure in its fourth aspect provides a control method for an image forming apparatus as specified in claim 13.

The present disclosure in its fifth aspect provides a computer program as specified in claim 14.

The present disclosure in its sixth aspect provides a computer program as specified in claim 15.

The present disclosure in its fourth aspect provides a computer-readable data carrier having stored thereon the computer program as specified above.

According to the present disclosure, it is possible to calculate the amount of carbon dioxide emissions with high accuracy based on all work information required to obtain a printed product using an image forming apparatus.

Features of the present disclosure will become apparent from the following description of embodiments with reference to the attached drawings. The following description of embodiments is described by way of example.

### BRIEF DESCRIPTION OF THE DRAWINGS

Fig. 1 is a network configuration diagram illustrating an overall configuration of a printing environmental load calculation system including an environmental load calculation server as an information processing apparatus according to a first embodiment.
Fig. 2 is a mechanical cross-sectional view of an image forming apparatus illustrated in Fig. 1.
Figs. 3A and 3B are block diagrams illustrating the hardware configurations of the respective apparatuses in the printing environmental load calculation system.
Fig. 4A is a diagram illustrating an example of a job history screen that displays the history of jobs subject to environmental load calculation in the image forming apparatus.
Fig. 4B is a diagram illustrating an example of a detailed calculation result screen, which calculates an amount of carbon dioxide emissions for a selected job and displays a detailed calculation result, according to the first embodiment.
Fig. 4C is a diagram illustrating an example of a calculation result list screen that displays the results of carbon dioxide emission calculations in a list.
Figs. 5A to 5C are diagrams illustrating the structure of job history information transmitted to the environmental load calculation server.
Fig. 6 is a diagram illustrating the software configuration of an environmental load calculation processing application that operates on the environmental load calculation server.
Fig. 7 is a flowchart illustrating a job history information acquisition process.
Fig. 8 is a flowchart illustrating a calculation target job selection process.
Fig. 9 is a flowchart illustrating a carbon dioxide emission amount calculation process.
Fig. 10A is a diagram illustrating an example of a detailed calculation result screen according to a second embodiment.
Fig. 10B is a diagram illustrating an example of a calculation result division screen.

### DESCRIPTION OF THE EMBODIMENTS

Example embodiments will now be described in detail with reference to the accompanying drawings. It should be understood that the following embodiments are provided for illustrative purposes only and are not intended to limit the scope of the present disclosure. While multiple features are described in the embodiments, the present disclosure is not limited to embodiments that include all such features, and various combinations and modifications thereof may be made as appropriate.

### First Embodiment

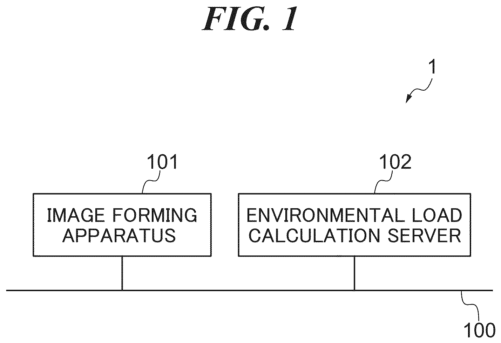

Fig. 1 is a network configuration diagram illustrating an overall configuration of a printing environmental load calculation system 1 including an environmental load calculation server as an information processing apparatus according to the first embodiment.

The printing environmental load calculation system 1 includes an image forming apparatus 101 and an environmental load calculation server 102, which are connected to each other via a network 100.

The image forming apparatus 101 receives a print instruction from an external source via the network 100, feeds a sheet (recording medium) based on the received print data and print settings, forms an image on the sheet to generate a printed product, and discharges it, thereby performing printing.

The environmental load calculation server 102 is a device that calculates an amount of environmental load associated with the printed product generated by the operation of the image forming apparatus 101. The environmental load calculation server 102 receives job history information from the image forming apparatus 101 via the network 100 when processing is performed in response to the print instruction. The environmental load calculation server 102 calculates the environmental load amount based on the job history information.

Although Fig. 1 illustrates a configuration in which only the image forming apparatus 101 performs printing in the printing environmental load calculation system 1, the embodiment is not limited thereto. That is, a plurality of image forming apparatuses having the same configuration as the image forming apparatus 101 may be connected to the environmental load calculation server 102 via the network 100, and the environmental load calculation server 102 may calculate environmental load amounts associated with printed products produced by these apparatuses. In the following description, when a plurality of such image forming apparatuses are present, the term "image forming apparatus 101" collectively refers to them, and each individual image forming apparatus is distinguished by an alphabetic suffix (for example, image forming apparatus 101a).

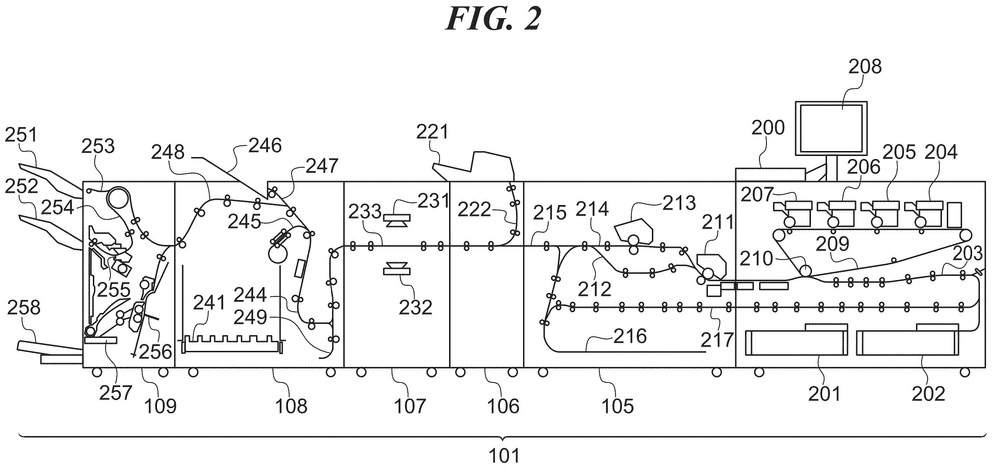

Fig. 2 is a mechanical cross-sectional view of the image forming apparatus 101. Various devices having different functions are connected to the image forming apparatus 101 so that complex printing processes can be performed.

As illustrated in Fig. 2, the image forming apparatus 101 includes a printer 105, an inserter 106, an inspection device 107, a large-capacity stacker 108, and a finisher 109.

The printer 105 is a device configured to form an image to be printed on a sheet.

The printer 105 includes a scanner 200, sheet feed decks 201 and 202, sheet conveyance paths 203, 212, 214, and 215, developing stations 204 to 207, a liquid-crystal display (LCD) panel 208, an intermediate transfer belt 209, and a secondary transfer roller 210. The printer 105 further includes a fixing device 211, a second fixing device 213, a sheet reversing path 216, and a duplex conveyance path 217.

In the printer 105, a toner image is formed on a sheet conveyed from the sheet feed decks 201 and 202 located at the bottom. Although an example in which the image is formed on a sheet of paper is described here, any printing medium other than paper may be used.

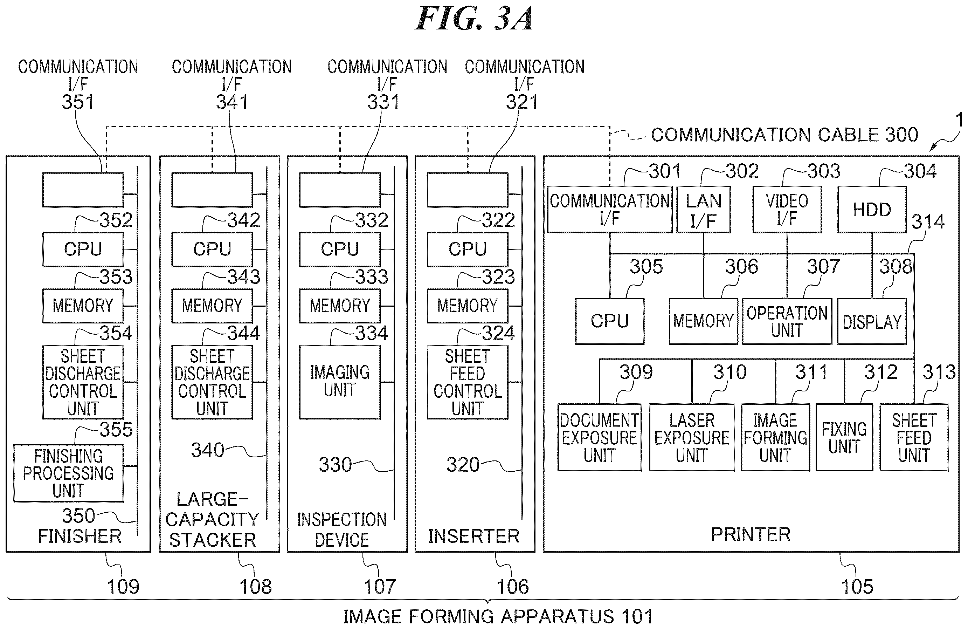

The scanner 200 internally includes a document exposure unit 309 (see Fig. 3A) having a document placement section, an exposure lamp, and a CCD camera. The scanner 200 reads document data from an original document.

The sheet feed decks 201 and 202 are capable of storing various types of sheets. Information about the sheets stored in the respective sheet feed decks 201 and 202 (such as sheet size and sheet type) can be set from the LCD panel 208 of the printer 105. Each of the sheet feed decks 201 and 202 is configured to separate only the topmost sheet from the stored sheets and convey it to the sheet conveyance path 203.

The developing stations 204 to 207 form toner images using color toners of Y (yellow), M (magenta), C (cyan), and K (black), respectively, to form a color image. Each of the developing stations 204 to 207 includes a laser exposure unit 310 having a photosensitive drum, a laser driver, and a polygon mirror, and an image forming unit 311 having a developing unit, a transfer unit, and a toner supply unit. The toner images formed in the developing stations are primarily transferred onto the intermediate transfer belt 209, which rotates clockwise as illustrated in the figure, and the toner images are secondarily transferred by the secondary transfer roller 210 onto a sheet conveyed through the sheet conveyance path 203.

The LCD panel 208 includes an operation unit 307 and a display 308 (described later). The LCD panel 208 displays information related to the printing status and settings of the image forming apparatus 101, as well as receiving various user operations.

The fixing device 211 internally includes a fixing unit 312 having a pressure roller and a heating roller. As a sheet passes between the rollers, the toner on the sheet is melted and pressed, thereby fixing the toner images onto the sheet. The sheet that has passed through the fixing device 211 is conveyed through the sheet conveyance path 212 to the sheet conveyance path 215.

When further melting and pressing are required for fixing depending on the type of sheet, the sheet, after passing through the fixing device 211, is conveyed through the sheet conveyance paths 212 and 214 to the second fixing device 213. The second fixing device 213 has the same configuration as the fixing device 211 and applies additional melting and pressing to the toner on the conveyed sheet. Thereafter, the sheet that has passed through the second fixing device 213 is conveyed through the sheet conveyance path 214 to the sheet conveyance path 215.

In the case of duplex image forming mode, the sheet, after passing through the fixing device 211, is conveyed from the sheet conveyance path 212 to the sheet reversing path 216, where it is reversed. The sheet is then conveyed to the duplex conveyance path 217, where a second-side image is transferred onto the sheet by the secondary transfer roller 210.

The inserter 106 is a device configured to insert an insertion sheet (second recording medium) and is capable of inserting a sheet at any position into a group of sheets printed and conveyed by the printer 105.

The inserter 106 includes an inserter tray 221 and a sheet conveyance path 222. The inserter 106 sends a sheet from the inserter tray 221 to the sheet conveyance path 215 through the sheet conveyance path 222 such that it merges with a sequence of sheets conveyed from the printer 105. Accordingly, the inserter 106 can insert a sheet at any desired position in the sequence of sheets and convey the resulting set of sheets to a subsequent device. The sheets that have passed through the inserter 106 are conveyed to the inspection device 107.

The inspection device 107 is a device configured to read an image on a sheet (printed matter or product) that has been printed and conveyed, compares the read image with the image to be printed, and inspects whether the printing has been performed correctly.

A sheet conveyance path 233 is provided inside the inspection device 107, and cameras 231 and 232 are arranged facing each other across the sheet conveyance path 233.

The camera 231 is a camera for reading the upper surface of a sheet conveyed along the sheet conveyance path 233, and the camera 232 is a camera for reading the lower surface of a sheet conveyed along the sheet conveyance path 233.

When a sheet conveyed along the sheet conveyance path 233 reaches a predetermined position, the inspection device 107 reads an image on the sheet by using the cameras 231 and 232, thereby inspecting whether the image has been correctly printed by the printer 105. Printed matter determined to have a defect or an issue as a result of the inspection is discharged separately from normal printed matter.

The large-capacity stacker 108 is a device capable of stacking a large number of sheets.

The large-capacity stacker 108 includes a stack tray 241, sheet conveyance paths 244, 245, 247, and 248, an escape tray 246, and a reversing unit 249.

The stack tray 241 is a tray for stacking sheets (printed matter) that have been determined as normal as a result of inspection by the inspection device 107. Sheets that have passed through the inspection device 107 are conveyed to the large-capacity stacker 108 through the sheet conveyance path 244. The sheets are then conveyed from the sheet conveyance path 244 through the sheet conveyance path 245 and stacked on the stack tray 241.

The escape tray 246 is a tray used to discharge printed matter that has been determined as defective as a result of inspection by the inspection device 107. When output to the escape tray 246, the sheets are conveyed from the sheet conveyance path 244 through the sheet conveyance path 247 to the escape tray 246.

When post-processing is to be performed on normal sheets (printed matter), the sheets that have passed through the inspection device 107 are conveyed from the sheet conveyance path 244 through the sheet conveyance path 248 to the finisher 109 located downstream.

The reversing unit 249 is a device configured to reverse sheets. When stacking a duplex-printed sheet on the stack tray 241, the reversing unit 249 reverses the sheet once such that the orientation of the sheet when stacked matches the orientation of the sheet when fed from one of the sheet feed decks 201 and 202. When the sheet is conveyed to the escape tray 246 or to a downstream post-processing device and discharged as is without being flipped for stacking, the reversing operation of the reversing unit 249 is not performed.

The finisher 109 is an inline finisher configured to apply a finishing process specified by the user to conveyed sheets. Specifically, the finisher 109 includes finishing units such as a processing unit 255 that performs stapling (single- or double-position stapling) or punching (two-hole or three-hole punching) and a saddle-stitching processing unit 256 that performs saddle-stitch binding to implement finishing functions. In addition, the finisher 109 includes sheet discharge trays 251 and 252, sheet conveyance paths 253, 254, and 257, and a saddle-stitch binding tray 258.

The sheet conveyance path 253 is a conveyance path that conveys sheets transported from the large-capacity stacker 108 to the discharge tray 251. Note that finishing processes such as stapling cannot be performed on sheets conveyed by the sheet conveyance path 253.

The sheet conveyance path 254 is a conveyance path that conveys sheets transported from the large-capacity stacker 108 to the processing unit 255 when a finishing process such as stapling is to be performed on the sheets.

The processing unit 255 performs the finishing process specified by the user on the sheets and outputs the finished sheets to the discharge tray 252.

The discharge trays 251 and 252 are each vertically movable. The user can operate the finisher 109 to lower the discharge tray 251 and stack sheets finished by the processing unit 255 on the discharge tray 251.

The saddle-stitching processing unit 256 is a processing unit to which sheets transported from the large-capacity stacker 108 are conveyed when saddle-stitch binding is specified. The saddle-stitching processing unit 256 performs stapling at the center of the conveyed sheets, folds the sheets in half, and produces a saddle-stitched booklet.

The sheet conveyance path 257 is a conveyance path that conveys the sheets folded in half by the saddle-stitching processing unit 256 to the saddle-stitch binding tray 258.

The saddle-stitch binding tray 258 has a belt conveyor structure, and the saddle-stitched booklet stacked on the saddle-stitch binding tray 258 is conveyed toward the left side.

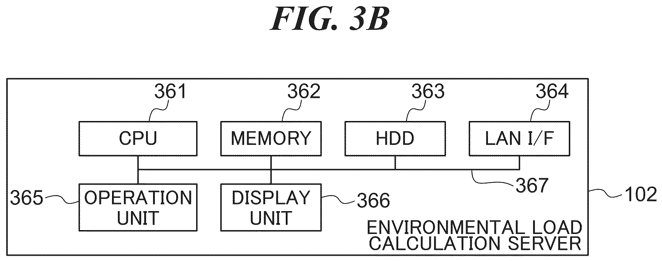

Figs. 3A and 3B are block diagrams illustrating the hardware configurations of the respective apparatuses (the image forming apparatus 101 and the environmental load calculation server 102) in the printing environmental load calculation system 1.

Fig. 3A is a block diagram illustrating the hardware configuration of the image forming apparatus 101.

First, the configuration of the printer 105 of the image forming apparatus 101 will be described.

The printer 105 includes a communication interface (I/F) 301, a LAN I/F 302, a video I/F 303, an HDD 304, a CPU 305, a memory 306, the operation unit 307, and the display 308. The printer 105 further includes the document exposure unit 309, the laser exposure unit 310, the image forming unit 311, the fixing unit 312, and a sheet feed unit 313. These components of the printer 105 are communicatively connected to each other via a system bus 314.

The communication I/F 301 is connected, via a communication cable 300, to the inserter 106, the inspection device 107, the large-capacity stacker 108, and the finisher 109, and communication is performed for controlling each of these devices.

The LAN I/F 302 is connected, via the network 100 (see Fig. 1), to a print server or information processing apparatus (not illustrated) to receive print instructions. The LAN I/F 302 is also connected to the environmental load calculation server 102 to communicate job history information and other data. The job ID used to identify the job history information communicated here may be assigned within the image forming apparatus 101, specified by the print server or information processing apparatus, or set by user input. When a job is received from the print server or information processing apparatus, job identifiers corresponding to respective steps involved in the production of the printed product may be stored in association with one another, or the same job ID may be used to issue the job instructions.

The video I/F 303 is connected, via a video cable, to a PC or external controller (not illustrated) that generates images for printing, and performs communication of rasterized image data and the like.

The HDD 304 is a storage device that stores programs and data. The CPU 305 performs overall control of image processing and printing based on the programs and the like stored in the HDD 304. The memory 306 stores programs and image data necessary for the CPU 305 to perform various processes and serves as a work area.

The operation unit 307 is configured to receive various operations from the user. The display 308 displays various setting information of the image forming apparatus 101, processing statuses of jobs, and the like.

The document exposure unit 309 performs a process of reading a document when the user uses the copier function or scanner function of the printer 105. When the user places a sheet on the document placement section of the scanner 200 and then provides a scan instruction through the LCD panel 208, the document exposure unit 309 illuminates the sheet on the document placement section with the exposure lamp and captures an image using the CCD camera, thereby reading the document data.

The laser exposure unit 310 is a device configured to perform primary charging and laser exposure to irradiate laser light onto the photosensitive drum for transferring a toner image. In the laser exposure unit 310, first, the surface of the photosensitive drum is uniformly charged to a negative potential through primary charging. Next, laser light is emitted from the laser driver and reflected by the polygon mirror to adjust the reflection angle, thereby irradiating the photosensitive drum. As a result, the negative charge on the irradiated portions is neutralized, forming an electrostatic latent image. The image forming unit 311 is a device configured to transfer toner onto a sheet. Specifically, the image forming unit 311 includes a developing unit, a transfer unit, a toner supply unit, and the like, and transfers toner from the photosensitive drum onto a sheet. In the developing unit, negatively charged toner supplied from a developing cylinder adheres to the electrostatic latent image on the surface of the photosensitive drum to form a visible image. In the transfer unit, a positive potential is applied to the intermediate transfer belt 209 to perform primary transfer for transferring the toner from the surface of the photosensitive drum onto the transfer belt. A positive potential is then applied to the secondary transfer roller 210 to perform secondary transfer for transferring the toner from the transfer belt onto the sheet.

The fixing unit 312 is a device configured to melt and fix the toner on the sheet using heat and pressure. The fixing unit 312 includes a pressure roller, a heating roller, and the like.

The sheet feed unit 313 includes the sheet conveyance path 203 for feeding sheets from the sheet feed decks 201 and 202, as well as rollers and various sensors (not illustrated in Fig. 2) installed along the sheet conveyance path 203. The sheet feed unit 313 controls the feeding and conveyance of sheets based on signals from these sensors.

Next, the configuration of the inserter 106 of the image forming apparatus 101 will be described.

The inserter 106 includes a communication I/F 321, a CPU 322, a memory 323, and a sheet feed control unit 324. These components are communicatively connected to each other via a system bus 320.

The communication I/F 321 is connected to the printer 105 via the communication cable 300 to perform communication necessary for control.

The CPU 322 performs various controls necessary for sheet feeding in accordance with a control program stored in the memory 323. The memory 323 is a storage device that stores the control program for the CPU 322. The sheet feed control unit 324 controls rollers and various sensors (not illustrated) installed along the sheet conveyance path 222 in the inserter 106 (Fig. 2) based on instructions from the CPU 322, thereby controlling the feeding and conveyance of sheets from the inserter tray 221 of the inserter 106 and from the printer 105.

Next, the configuration of the inspection device 107 will be described.

The inspection device 107 includes a communication I/F 331, a CPU 332, a memory 333, and an imaging unit 334. These components are communicatively connected to each other via a system bus 330.

The communication I/F 331 is connected to the printer 105 via the communication cable 300 to perform communication necessary for control. The CPU 332 performs various controls necessary for inspection in accordance with a control program stored in the memory 333.

The memory 333 is a storage device that stores the control program for the CPU 332. The information stored in the memory 333 is not limited to the control program. For example, if the inspection device 107 further includes a LAN I/F and receives inspection control information sent from a server or a PC connected to the inspection device 107 via LAN through the LAN I/F, the received inspection control information may be stored in the memory 333.

The imaging unit 334 is configured to capture a conveyed sheet (printed matter) based on instructions from the CPU 332. The CPU 332 analyzes the image captured by the imaging unit 334 to inspect the printed matter. A history of the inspection results and the setting information may be stored in the memory 333, and when displayed on an operation screen, a reference image stored in the memory 333 may be retrieved and displayed together on the operation screen.

Next, the configuration of the large-capacity stacker 108 of the image forming apparatus 101 will be described.

The large-capacity stacker 108 includes a communication I/F 341, a CPU 342, a memory 343, and a sheet discharge control unit 344. These components are communicatively connected to each other via a system bus 340.

The communication I/F 341 is connected to the printer 105 via the communication cable 300 to perform communication necessary for control. The CPU 342 performs various controls necessary for sheet discharge in accordance with a control program stored in the memory 343.

The memory 343 is a storage device that stores the control program for the CPU 342.

The sheet discharge control unit 344 controls the conveyance of transported sheets to the stack tray 241, the escape tray 246, or the finisher 109 located downstream based on instructions from the CPU 342.

Next, the configuration of the finisher 109 of the image forming apparatus 101 will be described.

The finisher 109 includes a communication I/F 351, a CPU 352, a memory 353, a sheet discharge control unit 354, and a finishing processing unit 355. These components are communicatively connected to each other via a system bus 350.

The communication I/F 351 is connected to the printer 105 via the communication cable 300 to perform communication necessary for control. The CPU 352 performs various controls necessary for finishing and sheet discharge in accordance with a control program stored in the memory 353.

The memory 353 is a storage device that stores the control program for the CPU 352.

The sheet discharge control unit 354 controls the conveyance and discharge of sheets based on instructions from the CPU 352.

The finishing processing unit 355 includes the processing unit 255, the saddle-stitching processing unit 256, and the like. The finishing processing unit 355 controls finishing processes such as stapling, punching, and saddle-stitch binding on sheets (printed matter) conveyed from the large-capacity stacker 108, based on instructions from the CPU 352.

Fig. 3B is a block diagram illustrating the hardware configuration of the environmental load calculation server 102.

The environmental load calculation server 102 includes a CPU 361, a memory 362, an HDD 363, a LAN I/F 364, an operation unit 365, and a display unit 366. These components are communicatively connected to each other via a system bus 367.

The CPU 361 comprehensively performs processes such as receiving job history information from the image forming apparatus 101 and calculating environmental load amounts, based on programs and data stored in the HDD 363. The memory 362 stores programs and data necessary for the CPU 361 to perform various processes and serves as a work area.

The HDD 363 stores programs and data necessary for operations such as printing processes. The operation unit 365 is a device configured to receive operational inputs from the user.

The display unit 366 displays video signals of still or moving images sent from the CPU 361, which represent information of applications or the like executed by the environmental load calculation server 102. The LAN I/F 364 is connected to the image forming apparatus 101 via the network 100 to perform communication such as reception of job history information.

In the above description, the image forming apparatus 101 transmits and receives data necessary for printing to and from an information processing apparatus such as a PC (not illustrated). The memories 306, 323, 333, 343, 353, and 362 may be any type of storage device capable of storing data and programs, and each may be replaced with, for example, a volatile RAM, a non-volatile ROM, an internal HDD, an external HDD, or a USB memory.

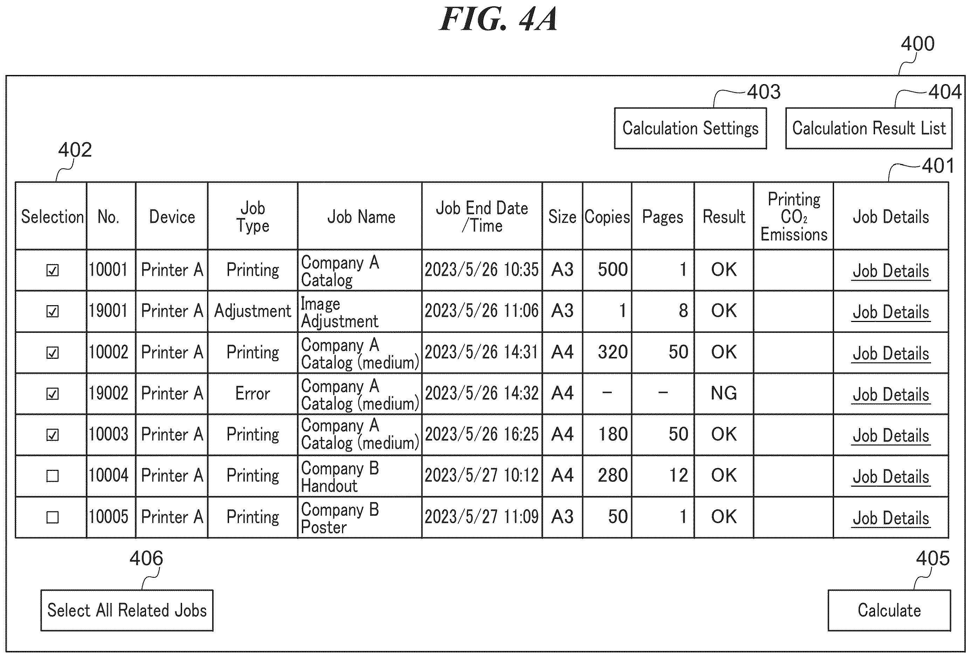

Figs. 4A to 4C illustrate examples of screens related to environmental load calculation according to the present embodiment, which are displayed on the display unit 366 of the environmental load calculation server 102. These screens may also be displayed on the LCD panel 208 of the printer 105. The settings selected by the user through these screens are stored in the HDD 363 of the environmental load calculation server 102.

Fig. 4A is a diagram illustrating an example of a job history screen 400 that displays a job history list of jobs that are subject to environmental load calculation in the image forming apparatus 101.

The job history screen 400 includes, in addition to the job history list, a Calculation Settings button 403, a Calculation Result List button 404, a CO₂ emission calculation (Calculate) button 405, and a Select All Related Jobs button 406.

In this embodiment, an example is described in which only the image forming apparatus 101 performs printing in the printing environmental load calculation system 1. Accordingly, only the job history of the image forming apparatus 101 (printer A) is illustrated in Fig. 4A. However, there may be two image forming apparatuses 101a and 101b as devices that perform printing in the printing environmental load calculation system 1. In this case, the job history list includes the job histories of the image forming apparatus 101a (printer A) and the image forming apparatus 101b (printer B).

The job history screen 400 displays a job history list of jobs subject to environmental load calculation. The history of each job displayed in the job history list includes information such as a job number, device information, job type, job name, job end date and time, paper size, number of printed copies, number of printed pages, job result, and amount of CO₂ emissions during printing. The job number is a number that uniquely identifies a job, the device information indicates the device that performed the job, and the job name is a name assigned to the job. The job history list also includes a Selection button 402 for selecting a job as a target for carbon dioxide emission calculation and a Job Details button 401 for checking more detailed job information for each displayed job.

The Calculation Settings button 403 is a button for displaying a carbon dioxide emission calculation setting screen. When the Calculation Settings button 403 is selected, the display on the display unit 366 transitions from the job history screen 400 to a calculation setting screen (not illustrated).

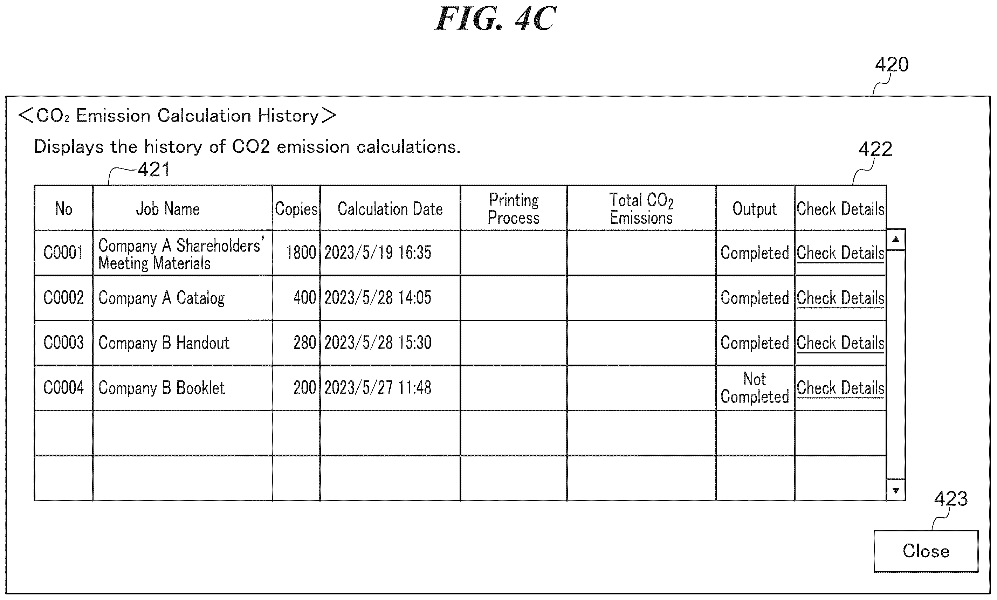

The Calculation Result List button 404 is a button for displaying a carbon dioxide emission calculation result list screen 420 (Fig. 4C). When the Calculation Result List button 404 is selected, the display on the display unit 366 transitions from the job history screen 400 to the calculation result list screen 420.

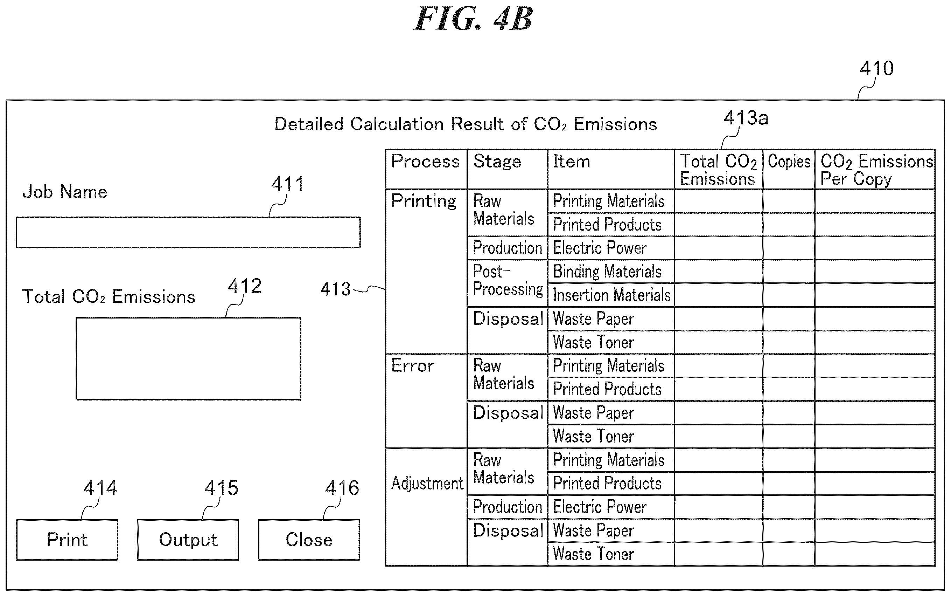

The CO₂ emission calculation button 405 is a button for performing the calculation of carbon dioxide emissions. When the CO₂ emission calculation button 405 is selected, the CPU 361 performs the calculation of CO₂ emissions for the job that is in the selected state by the Selection button 402. Details of the calculation result for each job are displayed on a detailed calculation result screen 410 (Fig. 4B) in response to pressing a calculation result confirmation button 422 (described later) on the calculation result list screen 420 (Fig. 4C).

Fig. 4B is a diagram illustrating an example of the detailed calculation result screen 410 that displays the detailed calculation result of carbon dioxide emissions for the job selected by the Selection button 402 in response to the selection of the CO₂ emission calculation button 405. The detailed calculation result screen 410 includes a job name display field 411 for the calculation target, a total CO₂ emission display field 412, a detailed calculation result display 413, a Print button 414, an Output button 415, and a Close button 416.

In the job name display field 411 for the calculation target, the job name of the job is displayed that corresponds to the calculation result confirmation button 422 selected on the calculation result list screen 420 (described later).

In the total CO₂ emission display field 412, the total emission amount is displayed, which is obtained by summing the carbon dioxide emissions calculated for the selected job. In the detailed calculation result display 413, the total CO₂ emissions, the number of copies, and the CO₂ emissions per copy are displayed based on the job information of the selected job for each calculation target item, indicating the printing process and the stage of the lifecycle. For example, when a numerical value is displayed in a display field 413a for the total CO₂ emissions illustrated in Fig. 4B, after the printed matter has been confirmed as a product, the CO₂ emissions from preliminary printing performed during the production process of the product are added to the total CO₂ emissions as the emissions required to obtain the product. Note that the printing process indicates which execution process (i.e., printing process, error process, or adjustment process) a job corresponds to among the printing job and its related jobs.

The Print button 414 is a button for issuing an instruction to print the calculation result related to carbon dioxide emissions displayed on the detailed calculation result screen 410. When the Print button 414 is pressed by the user, the CPU 361 creates a print page of the detailed calculation result and submits it to the image forming apparatus 101 as a printing job.

The Output button 415 is a button for issuing an instruction to output and save the calculation result related to carbon dioxide emissions displayed on the detailed calculation result screen 410 as data. When the Output button 415 is pressed by the user, the CPU 361 generates a file in a data format converted from the detailed calculation result and stores the file in the memory 362 of the environmental load calculation server 102.

The Close button 416 is a button for issuing an instruction to close the detailed calculation result screen 410. When the Close button 416 is pressed by the user, the display on the display unit 366 transitions from the detailed calculation result screen 410 to the job history screen 400.

Fig. 4C is a diagram illustrating an example of the calculation result list screen 420 that displays a calculation history list 421 indicating the results of carbon dioxide emission calculations in a list. The calculation result list screen 420 includes the calculation history list 421 and a Close button 423.

The calculation history list 421 displays a list of output results of carbon dioxide emissions for each job calculated in response to pressing the CO₂ emission calculation button 405 (Fig. 4A). The calculation history list 421 includes, for each job calculation result, a management number, job name, number of copies, calculation date, printing process, total CO₂ emissions as the calculation result, and information as to whether output has been performed. The calculation history list 421 further includes the calculation result confirmation (Check Details) button 422 for each displayed job to check the details of the calculation result. When the calculation result confirmation button 422 corresponding to one of the jobs displayed in the calculation history list 421 is pressed by the user, the display on the display unit 366 transitions to the detailed calculation result screen 410 for the job corresponding to the pressed calculation result confirmation button 422.

The Close button 423 is a button for issuing an instruction to close the calculation result list screen 420. When the Close button 423 is selected, the display on the display unit 366 transitions from the calculation result list screen 420 to the job history screen 400.

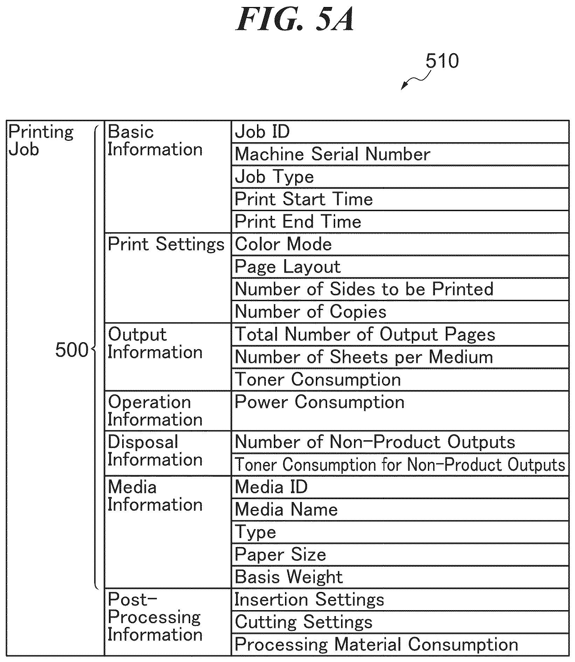

Figs. 5A to 5C illustrate data items included in the job history information that the environmental load calculation server 102 receives from the image forming apparatus 101. The environmental load calculation server 102 stores the received job history information and uses it for displaying the job history screen 400 and for calculating the carbon dioxide emissions displayed on the detailed calculation result screen 410. The jobs whose job history information is stored include three types: a printing job, an error job, and an adjustment job, as described later. The job history information for each of these three types includes basic information, print settings, output information, operation information, disposal information, and media information as common history information 500 used for calculating carbon dioxide emissions.

The basic information includes items common to all printing processes. Specifically, the basic information includes a job ID, machine serial number, job type, print start time, and print end time.

The print settings include a color mode for specifying whether printing is to be performed in monochrome, color, or a single color; a page layout for specifying the arrangement of pages; the number of sides to be printed for specifying whether printing is to be performed on one side or both sides of the medium; and the number of copies to be printed.

The output information includes the total number of output pages actually printed, the number of sheets actually used per medium, and the toner consumption. The number of sheets per medium is recorded as information indicating how many sheets were output for each media ID in association with the media ID recorded as the media information. When the image forming apparatus 101 has a plurality of color materials (toners), the toner consumption is recorded as a value obtained by calculating a dot count for each color material during printing.

The operation information indicates the power consumption obtained by monitoring the electric power from the print start time to the print end time of the job. The power consumption may be obtained by measuring the actual power during operation, or it may be calculated based on the state of the image forming apparatus 101 from the print start to the print end and the predetermined power consumption for each state. In this example, the power consumption is recorded as a value obtained by summing the electric power consumed by all devices connected to the image forming apparatus 101. However, the operation information may include, as individual items, the power consumptions of the respective devices connected to the image forming apparatus 101 without summing them.

The disposal information includes the number of non-product outputs that did not become the final products (deliverables) of the job and the amount of toner consumption for non-product outputs. The number of non-product outputs refers to, for example, the number of sheets determined to be defective or not good (NG) by the inspection device 107, sheets that remain in the image forming apparatus 101 due to a paper jam and must be removed and discarded, and sheets required for performing adjustment of the image forming apparatus 101. The toner consumption for non-product outputs refers to the amount of color material consumed for printing on pages of sheets that are discarded.

The media information includes a media ID, media name, type, paper size, and basis weight of the medium used for printing. The media ID is a unique ID assigned to each registered medium. The media name represents the name of the corresponding medium. The type indicates the characteristics of the medium, such as surface finish, and is recorded as, for example, plain paper, coated paper, or recycled paper. The paper size specifies the classification of a standard size, the width, and the length in the conveyance direction. If the specified width or length does not fall within a standard size classification, the paper size is recorded as a user-defined size. The basis weight indicates a value representing the weight of the medium per square meter. When multiple media are used in a single job, information for each medium is recorded.

Fig. 5A illustrates job history information 510 of a job in which printing was determined to have been successful and normally completed in the image forming apparatus 101 (hereinafter referred to as a "printing job").

The job history information 510 contains the information necessary to calculate the carbon dioxide emissions of the printing job. In addition to the common history information 500 described above, the job history information 510 includes post-processing information.

The post-processing information includes insertion settings, cutting settings, and processing material consumption related to the post-processing steps of the job.

The insertion settings include device information indicating which of the image forming apparatuses 101a or 101b is the source device of insertion sheets and setting information for inserting the insertion sheets with the inserter 106 (such as the medium to be inserted, insertion position, and number of sheets to be inserted). The device information may alternatively be obtained via user input.

The cutting settings are used when a cutting device (not illustrated) is connected to the image forming apparatus 101 and cutting is performed. The cutting settings specify the cutting direction, as well as the cutting amounts for the fore-edge and the top and bottom edges.

The processing material consumption indicates the amount of processing material, such as wire, used when binding is performed using the finishing function of the finisher 109. For example, in saddle-stitch binding, each copy is bound at two positions with wire, and the consumption of wire for these two staple positions is recorded.

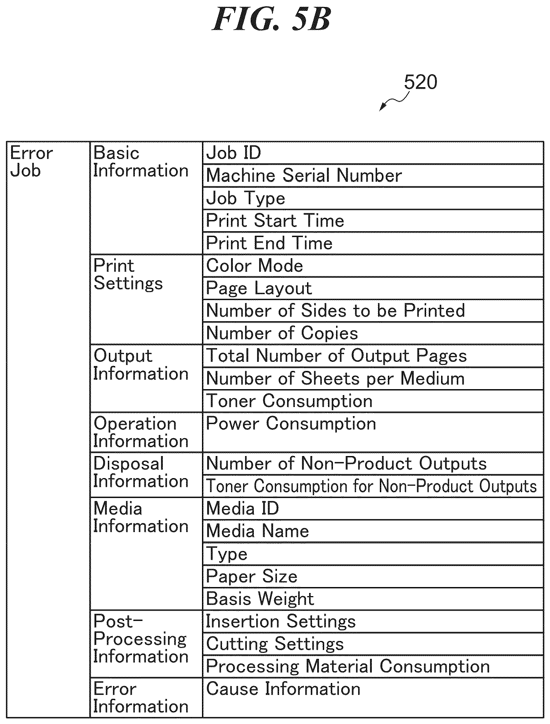

Fig. 5B illustrates job history information 520 of a job in which printing was determined to have failed and ended in the image forming apparatus 101 (hereinafter referred to as an "error job").

The job history information 520 contains the information necessary to calculate the carbon dioxide emissions of the error job. For example, if a paper jam occurs during printing and the job is aborted and terminated, the job is recorded as an error job in the job history information 520. Note that regardless of whether the CPU 305 determines that printing cannot continue and aborts the job, or the user issues a stop instruction without resuming printing, the aborted job is recorded as an error job in the job history information 520. On the other hand, if a paper jam occurs and the sheets remaining in the image forming apparatus 101 are removed, and printing is resumed and completed, the job that completes printing is recorded in the job history information 520 as a printing job that includes disposal information regarding the removed sheets.

The job history information 520 includes, in addition to the information contained in the job history information 510 illustrated in Fig. 5A, error information.

The error information includes information regarding the cause of an error. For example, if the user issues an instruction to cancel a running job for any reason, the error information is recorded as "user instruction." In addition, if the number of sheets determined to be defective by the inspection device 107 during a job exceeds a predetermined threshold, and the CPU 305 determines that there are too many defective sheets and aborts the job in progress, the error information is recorded as "device factor."

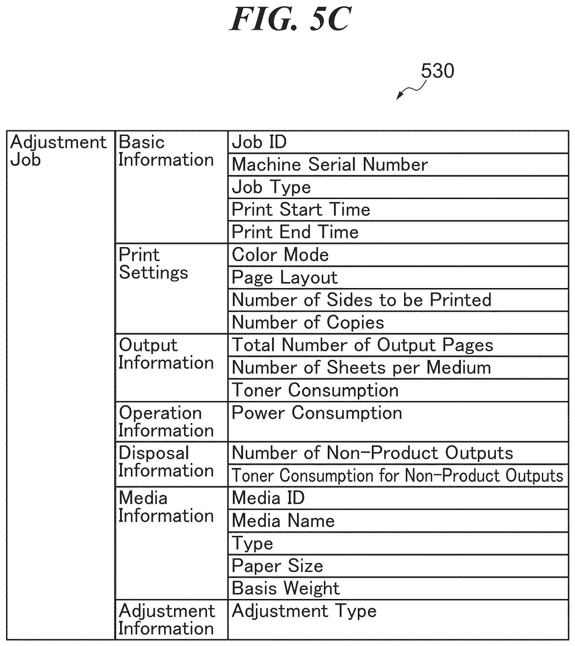

Fig. 5C illustrates job history information 530 of a job for adjusting the image forming conditions of a printing job in the image forming apparatus 101 (hereinafter referred to as an "adjustment job").

The job history information 530 contains the information necessary to calculate the carbon dioxide emissions of the adjustment job. The adjustment job is set by the CPU 305 according to the image forming conditions to be adjusted, and printing is performed for adjustment purposes.

In addition to the common history information 500 described above, the job history information 530 includes adjustment information.

The adjustment information includes the type of adjustment performed in the adjustment job. Examples of adjustment types include print position adjustment performed for the image forming apparatus 101, density adjustment for each medium, and density correction performed during printing to suppress image variation. In the adjustment job, printing is performed by the image forming apparatus 101, the printed results are read, and the image forming conditions of the printing job are adjusted accordingly. Therefore, information related to printing in the adjustment job is recorded as the common history information 500 in the job history information 530, while information indicating which specific image forming condition of the printing job was adjusted is recorded as the adjustment type in the adjustment information.

By recording the job history information 510 to 530 in the environmental load calculation server 102, the environmental load amount for each job execution can be calculated.

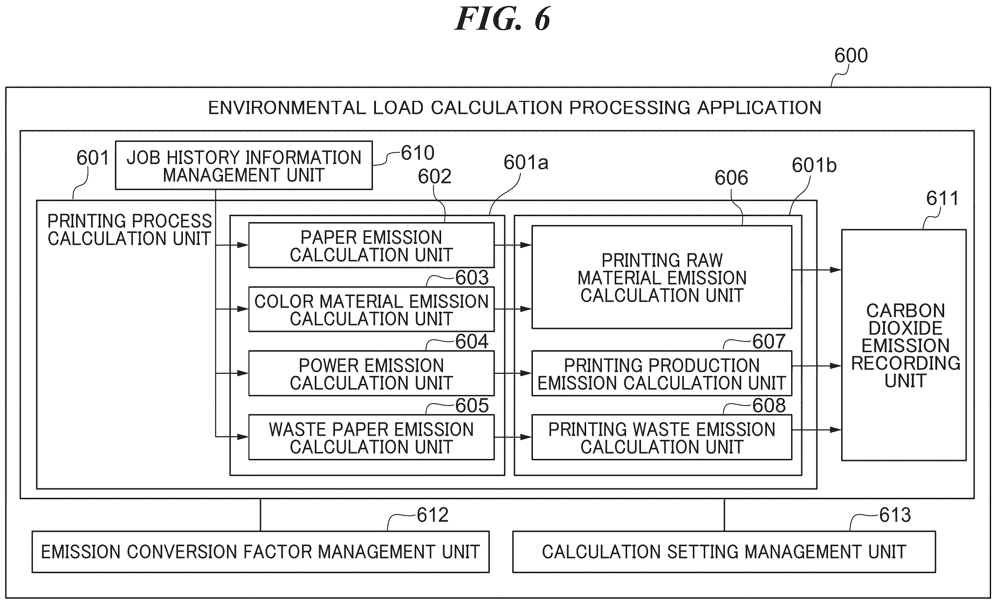

Fig. 6 is a diagram illustrating the software configuration of an environmental load calculation processing application 600 that operates on the environmental load calculation server 102. The environmental load calculation processing application 600 is stored in the HDD 363 and is configured to control an environmental load calculation process that calculates the amount of carbon dioxide emissions generated when each job, such as a printing job, an error job, or an adjustment job, is performed. The CPU 361 reads the environmental load calculation processing application 600 from the HDD 363 into the memory 362 and executes it.

The environmental load calculation processing application 600 includes a job history information management unit 610, a printing process calculation unit 601, a carbon dioxide emission recording unit 611, an emission conversion factor management unit 612, and a calculation setting management unit 613.

The printing process calculation unit 601 includes an activity-based emission calculation unit 601a that calculates various emissions by detailed activities, and a stage-based emission calculation unit 601b that calculates carbon dioxide emissions for each process stage. Although not illustrated in Fig. 6, both the activity-based emission calculation unit 601a and the stage-based emission calculation unit 601b can access the carbon dioxide emission recording unit 611, the emission conversion factor management unit 612, and the calculation setting management unit 613.

The job history information management unit 610 can search for and acquire job history information selected from the job histories recorded in the HDD 363, and stores the acquired job history in the memory 362. When the CO₂ emission calculation button 405 is pressed on the job history screen 400, the job ID of the job selected by the Selection button 402 is notified, and the job history information management unit 610 acquires the corresponding job history information based on this job ID. Regardless of the type of job, whether it is a printing job, an error job, or an adjustment job, the printing process calculation unit 601 is invoked based on the acquired job history information.

The printing process calculation unit 601 performs processing to calculate the amount of carbon dioxide emissions from the job history of the printing type.

In the printing process calculation unit 601, first, the information in the memory 362 acquired from the job history is sent to different processing units of the activity-based emission calculation unit 601a according to the related activities. The activity-based emission calculation unit 601a includes a paper emission calculation unit 602, a color material emission calculation unit 603, a power emission calculation unit 604, and a waste paper emission calculation unit 605.

The paper emission calculation unit 602 reads the number of output sheets for each medium from the job history information, associates each media ID with the corresponding number of output sheets, and records the result in the memory 362 as the paper emission amount. If the job history information includes insertion settings in the post-processing information, the paper emission calculation unit 602 adds the media and their usage amounts according to the insertion settings to the paper emission amount and records the total in the memory 362.

The color material emission calculation unit 603 reads the amount of color material consumption from the job history information and records it in the memory 362 as the emission amount for each color material. When the information recorded as color material consumption represents the count of printed dots for each color, the color material emission calculation unit 603 calculates the color material emission amount by multiplying the number of dots for each color by the amount of color material consumed per dot during printing by the printer 105.

The power emission calculation unit 604 reads the power consumption information from the operation information of the job history information and records it in the memory 362 as the power emission amount.

The waste paper emission calculation unit 605 reads the number of non-product outputs from the disposal information of the job history information, associates each media ID with the corresponding number of discarded sheets, and records the result in the memory 362. When cutting settings are specified, the waste paper emission calculation unit 605 also records the paper area that is cut and discarded according to the cutting settings.

Next, in the printing process calculation unit 601, the calculation results obtained by the activity-based emission calculation unit 601a are sent to different processing units of the stage-based emission calculation unit 601b according to the related stages. The stage-based emission calculation unit 601b includes a printing raw material emission calculation unit 606, a printing production emission calculation unit 607, and a printing waste emission calculation unit 608.

The stage-based emission calculation unit 601b performs processing to calculate the amount of carbon dioxide emissions for each stage, based on the calculation results obtained by the paper emission calculation unit 602, the color material emission calculation unit 603, the power emission calculation unit 604, and the waste paper emission calculation unit 605. Specifically, the carbon dioxide emissions are calculated by multiplying each result by a predetermined carbon dioxide emission amount per unit and then summing them to obtain the total emissions.

The printing raw material emission calculation unit 606 calculates the carbon dioxide emissions at the raw material stage based on the paper emission amount calculated by the paper emission calculation unit 602 and the color material emission amount calculated by the color material emission calculation unit 603. Specifically, the printing raw material emission calculation unit 606 reads the carbon dioxide emission conversion factor per medium, corresponding to the output media ID recorded in the memory 362, from the carbon dioxide emission conversion factors stored in the HDD 363, and multiplies it by the number of output sheets. The carbon dioxide emissions are thereby calculated and recorded in the memory 362 as the raw material emission amount. Next, the printing raw material emission calculation unit 606 reads the color material usage amount recorded in the memory 362, retrieves the carbon dioxide emission conversion factor stored in the HDD 363, and multiplies the two to calculate the carbon dioxide emission amount. The carbon dioxide emission conversion factor for each color material varies depending on the printer 105 and the color materials used in the printer 105. Therefore, the printing raw material emission calculation unit 606 identifies the printer 105 based on the machine serial number in the job history information and acquires the conversion factor for each color material used in the printer. The printing raw material emission calculation unit 606 then calculates the carbon dioxide emissions using the conversion factor for the color material corresponding to the usage amount. If the job history includes a processing material consumption amount, the printing raw material emission calculation unit 606 reads the processing material consumption amount, calculates the carbon dioxide emissions based on the usage amount of processing material, and adds it to the carbon dioxide emissions at the raw material stage.

The printing production emission calculation unit 607 calculates the carbon dioxide emissions at the production stage based on the power consumption amount. The carbon dioxide emission conversion factor used for the power consumption amount is read from information stored in the HDD 363 and multiplied by the power consumption amount recorded in the memory 362, and the resulting value is recorded in the memory 362 as the carbon dioxide emissions at the production stage. The carbon dioxide emission conversion factor used for the power consumption amount may be a default factor, a conversion factor for power consumption set via the Calculation Settings button 403, or a conversion factor for power consumption disclosed by each power company.

The printing waste emission calculation unit 608 calculates the carbon dioxide emissions at the disposal stage based on the number of discarded sheets for each medium. Specifically, the printing waste emission calculation unit 608 reads the carbon dioxide emission conversion factor for disposal per medium, corresponding to the output media ID recorded in the memory 362, from the carbon dioxide emission conversion factors stored in the HDD 363, and multiplies it by the number of discarded sheets. The carbon dioxide emissions are thereby calculated and recorded in the memory 362 as the disposal emission amount. In calculating the carbon dioxide emissions at the disposal stage, a recycling rate of the waste may be set, and the carbon dioxide emissions associated with recycling may be calculated. For example, if the recycling rate set via the Calculation Settings button 403 is 30%, the carbon dioxide emissions at the disposal stage may be calculated by applying the conversion factor for recycling to 30% of the discarded sheets and the conversion factor for disposal to the remaining 70%.

The carbon dioxide emission recording unit 611 receives the calculation results from the printing raw material emission calculation unit 606, the printing production emission calculation unit 607, and the printing waste emission calculation unit 608, and stores the calculation results in the HDD 363. The calculation results are stored for each process and stage, and when results for the same process or stage are received, multiple entries are recorded in a list format, and the summed value for each process and stage is also stored. The overall emissions are recorded as those corresponding to the product created from the selected job, and a calculation ID corresponding to the product is assigned and recorded in association therewith.

The emission conversion factor management unit 612 manages the conversion factors used to convert activity amounts into carbon dioxide emissions. The emission conversion factor management unit 612 maintains information associating each item to be converted with a conversion factor. This information is stored in the HDD 363 and read into the memory 362 during processing for data transfer. The internally managed emission conversion factors may be stored as a database, and these data may be updated on the environmental load calculation server 102, or may be updated based on a database provided from an external source. The emission conversion factors may, for example, be recorded as separate information for each medium or color material used as a raw material. In addition, conversion factors for disposal or recycling may be separately recorded and managed for each item.

The calculation setting management unit 613 is configured to manage the setting values used to calculate the amount of carbon dioxide emissions. The calculation setting management unit 613 also manages emission calculation rules that specify whether to add up not only the emissions in the printing process, but also the emissions selected from those of each stage or item in the error process and adjustment process, and record the total as the overall carbon dioxide emissions. For example, the emission calculation rules may be set via a settings screen displayed by pressing the Calculation Settings button 403 on the job history screen 400 and stored in the HDD 363 as calculation settings. The calculation setting management unit 613 may also receive a request from each processing unit of the environmental load calculation processing application 600 to read a setting value and may transfer the requested value to the HDD 363. Additionally, the emission calculation rules may be edited and updated on the environmental load calculation server 102, or may be updated based on a database provided from an external source.

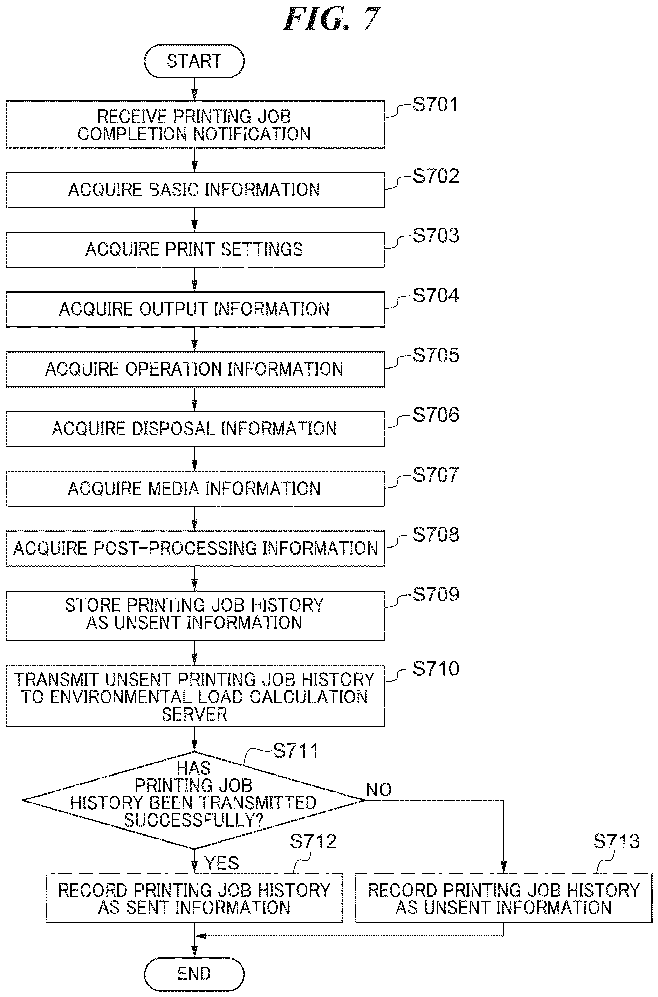

Fig. 7 is a flowchart illustrating an information transmission process to the environmental load calculation server 102 performed when a printing job is completed in the image forming apparatus 101. The series of steps in this process is implemented by the CPU 305 of the printer 105 reading the control program from the HDD 304 and loading it into the memory 306.

In step S701, upon receiving a printing job completion notification from one of the sheet feed decks 201 and 202 in the printer 105 or from the large-capacity stacker 108 or the finisher 109 connected to the communication I/F 301, the CPU 305 determines that a printing job has been completed. The process then proceeds to step S702.

In step S702, the CPU 305 acquires the basic information of the completed job from the memory 306 and the HDD 304, and stores it in the memory 306 as the basic information of the job history information. After the storage of the basic information is completed, the process proceeds to step S703.

In step S703, the CPU 305 acquires the print settings of the completed job from the memory 306 and the HDD 304, and stores them in the memory 306 as the print settings of the job history information. The print settings include the color mode actually used, page layout, number of sides printed, and number of copies. After the storage of the print settings is completed, the process proceeds to step S704.

In step S704, the CPU 305 acquires the output information of the completed job from the memory 306 and the HDD 304, and stores it in the memory 306 as the output information of the job history information. The output information of the job history information includes the total number of output pages actually printed, the number of sheets actually used per medium, and the toner consumption. For example, if multiple media are used in the job, the sum of the output sheets for all media is stored as the total number of output pages, and the number of output sheets for each medium is stored separately as the number of output pages per medium. The toner consumption is recorded by acquiring the value corresponding to the consumption of each color material (toner) used in the printer 105. For example, in the case of four-color color printing, the value obtained by counting the number of dots forming the image for each corresponding color is recorded as the toner consumption. After the storage of the output information is completed, the process proceeds to step S705.

In step S705, the CPU 305 acquires the operation information of the completed job from the memory 306 and the HDD 304, and stores it in the memory 306 as the operation information of the job history information. The information stored as the operation information is the power consumption. When a power meter is connected to the image forming apparatus 101, the total power consumption measured by the power meter during the period from the start to the completion of the job is recorded as the power consumption. On the other hand, when no power meter is connected to the image forming apparatus 101, the power consumption to be recorded may be calculated based on the state transitions of the image forming apparatus 101 during the period from the start to the end of printing and the standard power consumption for each state. After the storage of the operation information is completed, the process proceeds to step S706.

In step S706, the CPU 305 acquires the disposal information of the completed job from the memory 306 and the HDD 304, and stores it in the memory 306 as the disposal information of the job history information. The disposal information includes the number of outputs that did not become final products. Examples of such non-product outputs include outputs that the inspection device 107 determined to be defective, sheets that were not properly output due to a paper jam or the like, and sheets output for image adjustment during the job. The number of outputs determined to be defective in inspection can be obtained from the inspection device 107. The number of outputs involved in a paper jam or the like can be calculated based on the location where the paper jam occurred, the feed count from the sheet feed decks 201 and 202, and the discharge counts from the sheet conveyance path 245 of the large-capacity stacker 108 and the sheet conveyance paths 253 and 254 of the finisher 109. The number of sheets output for image adjustment can be calculated based on whether image adjustment was performed and the predefined number of sheets used for the adjustment. After the storage of the disposal information is completed, the process proceeds to step S707.

In step S707, the CPU 305 acquires media information of the medium used in the completed job from the memory 306 and the HDD 304, and stores it in the memory 306 as the media information of the job history information. Specifically, the medium used is identified from the output information of the job, and the media ID, media name, type, paper size, and basis weight of the corresponding medium are acquired to be recorded as the media information. When the output information includes multiple types of media used, the CPU 305 acquires the media information for each of the media and records them as the media information. After the storage of the media information is completed, the process proceeds to step S709.

In step S708, the CPU 305 acquires post-processing information used in the completed job from the memory 306 and the HDD 304, and stores it in the memory 306 as the post-processing information of the job history information. The settings to be recorded as the post-processing information are acquired from the insertion settings, cutting settings, and binding settings specified for the printing job. After the storage of the post-processing information is completed, the process proceeds to step S709.

In step S709, the CPU 305 stores the job history information acquired and stored in steps S702 to S708 in the HDD 304 as unsent information for the corresponding job ID. The process then proceeds to step S710.

In step S710, the CPU 305 transmits all unsent job history information stored in the HDD 304 to the environmental load calculation server 102 via the LAN I/F 302. After transmission is completed, the process proceeds to step S711.

In step S711, the CPU 305 determines whether the transmission of the job history information performed in step S710 has been successful. If the transmission has been successful (YES in step S711), the process proceeds to step S712. If the transmission has failed (NO in step S711), the process proceeds to step S713. In step S712, the CPU 305 records the successfully transmitted job history information as sent information in the HDD 304, and this process ends. In step S713, the CPU 305 determines that the transmission has not been completed and records the unsent job history information as unsent information in the HDD 304, and this process ends.

As described above, in this process, when a printing job is completed in the image forming apparatus 101, the job history information 510 (i.e., the common history information 500 and the post-processing information) is acquired and subsequently transmitted to the environmental load calculation server 102.

Similarly, although the details are omitted, in the image forming apparatus 101, when an error job has ended, the job history information 520 (i.e., the common history information 500, the post-processing information, and the error information) is acquired and subsequently transmitted to the environmental load calculation server 102. In addition, in the image forming apparatus 101, when an adjustment job has ended, the job history information 530 (i.e., the common history information 500 and the adjustment information) is acquired and subsequently transmitted to the environmental load calculation server 102.

Upon receiving the job history information (510, 520, or 530) from the image forming apparatus 101 as described above, the environmental load calculation server 102 stores the information in the job history information within the HDD 363.

When the image forming apparatuses 101a and 101b are connected to the environmental load calculation server 102, each of the image forming apparatuses 101a and 101b transmits the job history information (510, 520, or 530) when a printing job is completed, when an error job has ended, or when an adjustment job has ended. The environmental load calculation server 102 receives the job history information from each of the image forming apparatuses 101a and 101b and stores it in the job history information within the HDD 363.

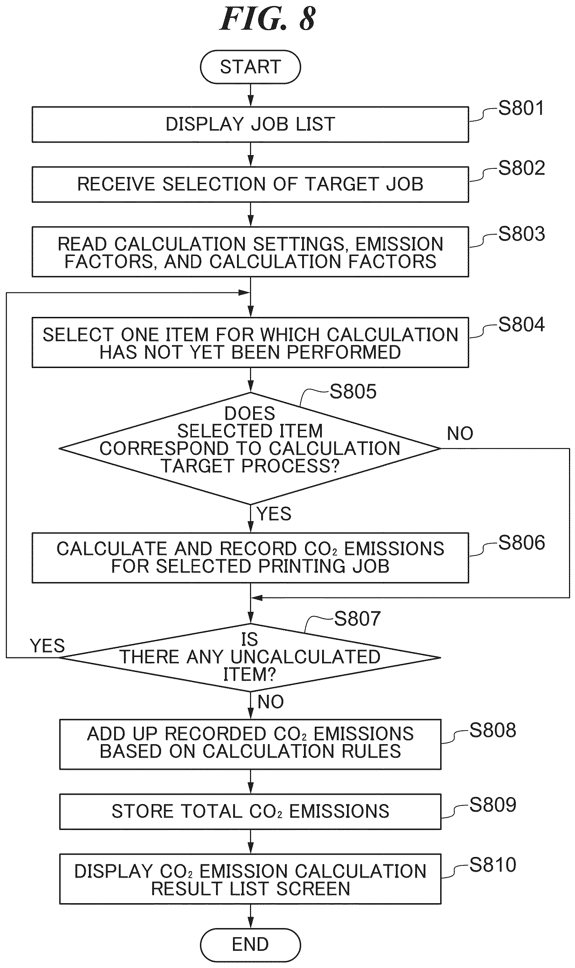

Fig. 8 is a flowchart illustrating a carbon dioxide emission calculation process performed in the environmental load calculation server 102. The series of steps in this process is implemented by the CPU 361 of the environmental load calculation server 102 reading the control program from the HDD 363 and loading it into the memory 362.

In step S801, the CPU 361 reads the job history information received from the image forming apparatuses 101a and 101b from the HDD 363, generates the job history screen 400, and displays it on the display unit 366. The process then proceeds to step S802.

In step S802, the CPU 361 waits for operations on the Selection button 402 and the CO₂ emission calculation button 405 on the job history screen 400 displayed on the display unit 366. Having detected that the user has pressed the CO₂ emission calculation button 405 after selecting the Selection button 402, the CPU 361 records the job ID of the job history information selected by the Selection button 402 as the calculation target job ID in the memory 362. The process then proceeds to step S803. In this example, the user can select the job history information of the image forming apparatuses 101a and 101b corresponding to the period during which the product was created. The user can also determine from the content displayed on the job history screen 400 whether a job is related to the product. In addition, when jobs are submitted from a print server or an information processing apparatus (not illustrated in Fig. 1), as each job is assigned a corresponding job ID and job name, jobs with the same job ID or job name may be automatically set to the selected state.

In step S803, the CPU 361 reads the calculation settings and the emission factors and calculation factors used for the calculation from the HDD 363 and loads them into the memory 362. The calculation settings are set by pressing the Calculation Settings button 403 on the job history screen 400, and the set values are stored in the HDD 363 for use in calculating the amount of carbon dioxide emissions. The emission factors, which are used in the printing process, are read from the emission factor database stored in the HDD 363. After loading the calculation settings, emission factors, and calculation factors into the memory 362, the process proceeds to step S804.

In step S804, the CPU 361 selects one item for which calculation has not yet been performed from among the calculation target job IDs recorded in the memory 362 in step S802, and reads the job history information associated with the selected job ID into the memory 362. The process then proceeds to step S805.

In step S805, the CPU 361 determines whether the job history information read into the memory 362 corresponds to job history information of a calculation target process. If it corresponds to job history information of a calculation target process (YES in step S805), the process proceeds to step S806. If it does not correspond to job history information of a calculation target process (NO in step S805), the process proceeds to step S807.

In step S806, the CPU 361 invokes the printing process calculation unit 601 of the environmental load calculation processing application 600 using the job history information of the selected calculation target job. The invoked printing process calculation unit 601 (first calculation unit, second calculation unit) performs the calculation process for the carbon dioxide emissions of the printing process. The CPU 361 then records in the memory 362 that the calculation for the item selected in step S804 has been completed. Thereafter, the process proceeds to step S807.

In step S807, the CPU 361 determines whether there is any uncalculated item among the calculation target job IDs. If there is an uncalculated item (YES in step S807), the process returns to step S804. If there is no uncalculated item (NO in step S807), the process proceeds to step S808.

In step S808, the CPU 361 (addition unit) invokes the carbon dioxide emission recording unit 611 of the environmental load calculation processing application 600. First, the CPU 361 acquires the emission calculation rules managed by the calculation setting management unit 613, which specify which emissions are to be added up. Next, the CPU 361 reads all carbon dioxide emission values of the calculation target jobs stored in the HDD 363 based on the emission calculation rules and adds up the selected carbon dioxide emissions from each process, stage, and item. In this manner, the total carbon dioxide emissions of the calculation target jobs are calculated. After recording the calculated result in the memory 362, the process proceeds to step S809.

In step S809, the CPU 361 stores the total carbon dioxide emissions recorded in the memory 362 in step S808 in the HDD 363 (storage unit) as a carbon dioxide emission calculation history. The information stored in this step is output as the detailed result on the detailed calculation result screen 410 when the calculation result confirmation button 422 for a job is pressed on the carbon dioxide emission calculation result list screen 420. After recording the carbon dioxide emission calculation history, the process proceeds to step S810.

In step S810, the CPU 361 generates the detailed calculation result screen 410 that displays the total carbon dioxide emissions recorded in the memory 362 in step S808 and displays it on the display unit 366. After displaying the carbon dioxide emission calculation result list screen 420 on the display unit 366, this processing ends.

Next, a description will be given of the related job selection process. The term "related job" as used herein refers to a job performed before or after the printing job, such as an adjustment job that performs adjustment printing of the image forming apparatus 101 for performing the printing job, or an error job that was performed with the same print settings as the printing job but ended in failure.

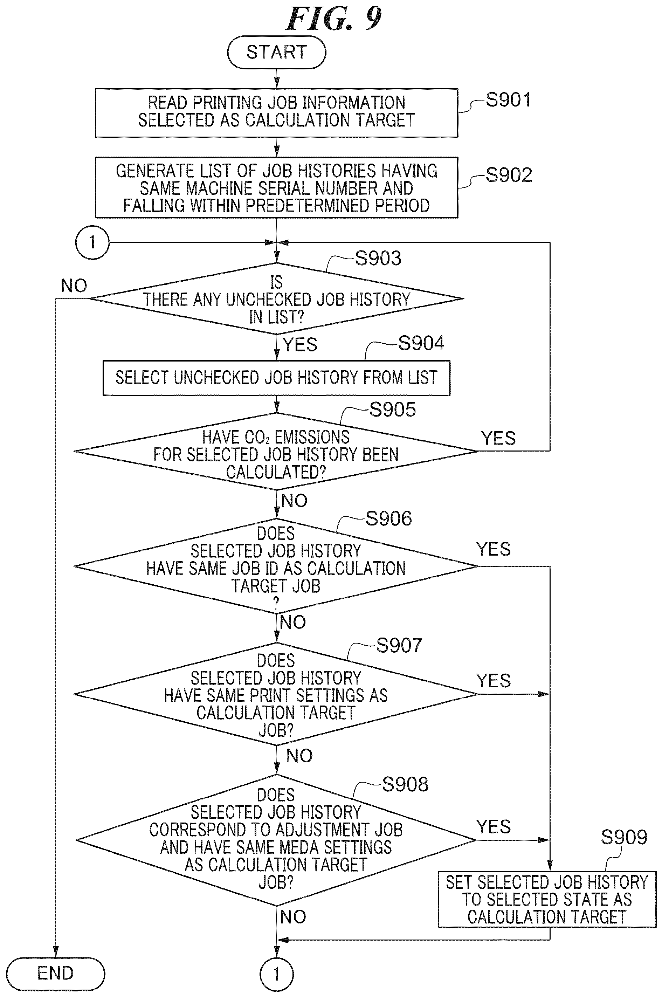

Fig. 9 is a flowchart illustrating a related job selection process performed in the environmental load calculation server 102. This process is implemented by the CPU 361 of the environmental load calculation server 102 reading the control program from the HDD 363 and loading it into the memory 362. The process starts, in the process of step S802, when the job history is selected by the Selection button 402 on the job history screen 400 in the environmental load calculation server 102.

In step S901, the CPU 361 reads the job history information selected by the Selection button 402 from the HDD 363 and stores it in the memory 362. The process then proceeds to step S902.

In step S902, the CPU 361 reads the machine serial number and the print end time from the job history information read in step S901, and generates a job history list. The CPU 361 then extracts, from the generated job history list, the job histories having the same machine serial number as that of the read job and falling within a predetermined period from the print end time, and records them as a candidate list in the memory 362. Thereafter, the process proceeds to step S903.

In step S903, the CPU 361 checks whether there is any unchecked item remaining in the candidate list recorded in the memory 362 in step S902. If there is an unchecked item (YES in step S903), the process proceeds to step S904. If there is no unchecked job history (NO in step S903), this process ends.

In step S904, the CPU 361 selects an unchecked job history from the candidate list recorded in the memory 362 as a check target, reads the job history information of the check target from the HDD 363, and stores it in the memory 362. The CPU 361 then records the check target job as "checked" in the candidate list. Thereafter, the process proceeds to step S905.

In step S905, the CPU 361 determines whether the carbon dioxide emissions for the job history information of the check target read into the memory 362 in step S904 have already been calculated. If the carbon dioxide emissions have already been calculated (YES in step S905), the process returns to step S903. If the emissions have not yet been calculated (NO in step S905), the process proceeds to step S906.

In step S906, the CPU 361 checks whether the job name of the check target job history information read into the memory 362 in step S904 is the same as the job name of the selected job history information read in step S901. If the job names are the same (YES in step S906), the process proceeds to step S909. If the job names are not the same (NO in step S906), the process proceeds to step S907.

In step S907, the CPU 361 checks whether the print settings of the check target job history information read into the memory 362 in step S904 are the same as the print settings of the selected job history information read in step S901. If the print settings are the same (YES in step S907), the process proceeds to step S909. If the print settings are not the same (NO in step S907), the process proceeds to step S908. The determination of whether the print settings are the same is made based on whether all the items of the print settings, namely color mode, page layout, number of sides to be printed, and number of copies, are identical. The print settings may also be determined to be the same by comparing only some of the settings.

In step S908, the CPU 361 first determines whether the job type of the check target job history information read into the memory 362 in step S904 corresponds to an adjustment job. If it corresponds to an adjustment job, the CPU 361 further checks whether the media settings of the job history information read into the memory 362 in step S904 are the same as the media settings of the selected job history information read in step S901. If the media settings are the same (YES in step S908), the process proceeds to step S909. On the other hand, if the job type of the check target job history information does not correspond to an adjustment job, or if it corresponds to an adjustment job but the media settings are not the same (NO in step S908), the process returns to step S903. In adjusting the image forming apparatus 101, some adjustment operations are performed using the same medium as that used for the product; therefore, it is determined whether the media settings are the same. The determination of whether the media settings are the same may be made by comparing the media IDs or by checking whether all the items of the media settings are identical.

In step S909, the CPU 361 selects (extracts) the job history selected in step S904 as a calculation target and sets it to the state in which the Selection button 402 is pressed. The process then returns to step S903.

Although in this process the jobs determined to be calculation targets are automatically selected, they may instead be displayed as calculation target candidates to allow the user to select them. In addition, the determination of calculation target candidates may be made based on information other than the job history information used in this process.

### Second Embodiment

Next, a second embodiment will be described. This embodiment illustrates an example in which the calculation result regarding the environmental load calculation in the first embodiment is divided.

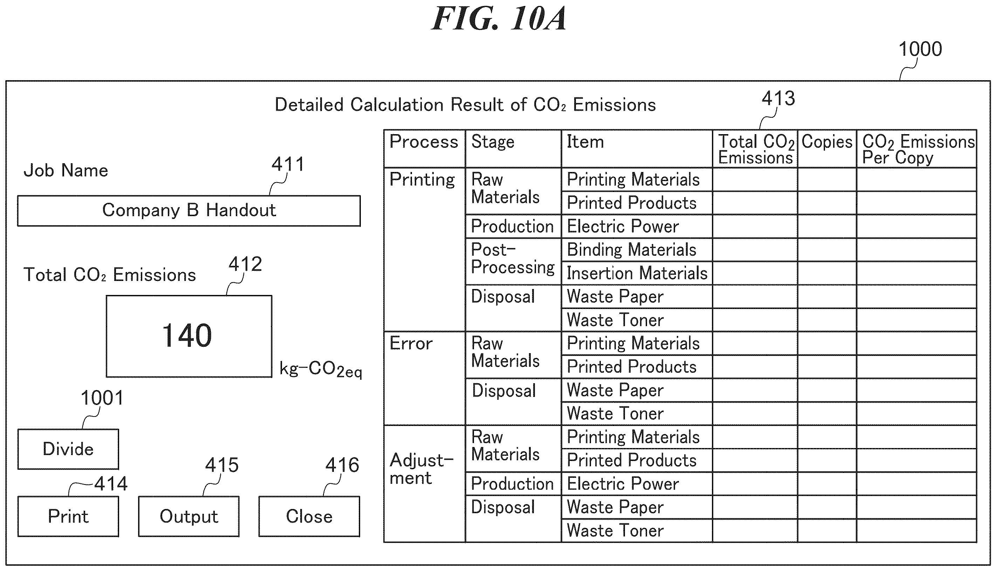

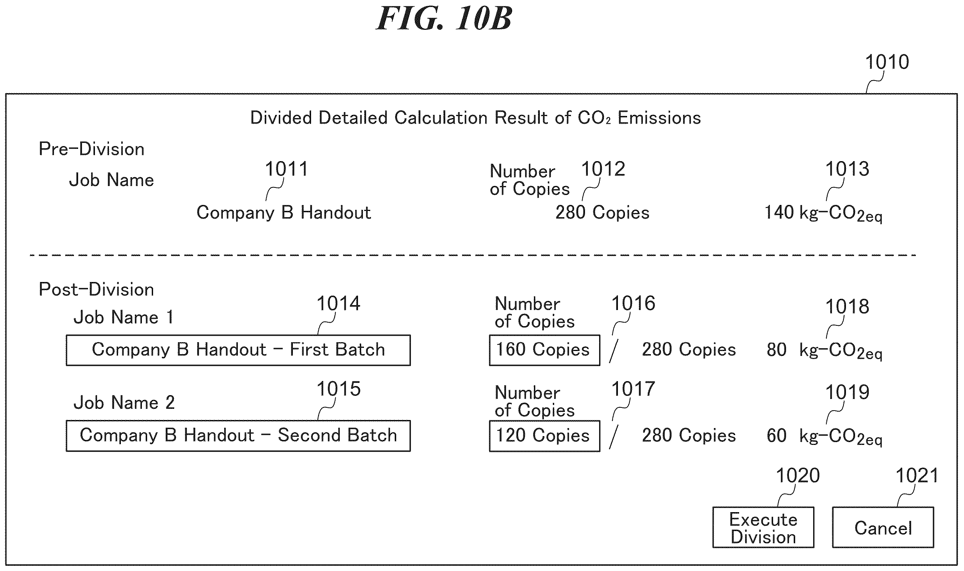

In this embodiment, instead of the detailed calculation result screen 410 (Fig. 4B), a detailed calculation result screen 1000 (Fig. 10A) is displayed on the display unit 366 of the environmental load calculation server 102. Additionally, when a Divide button 1001 is pressed on the detailed calculation result screen 1000, a calculation result division screen 1010 illustrated in Fig. 10B is displayed. In other respects, this embodiment is similar to the first embodiment in terms of hardware and software configuration. Accordingly, like reference numerals are used to designate like or corresponding components, and redundant explanations are omitted.

Figs. 10A and 10B illustrate examples of display screens for dividing the calculation result regarding the environmental load calculation in the first embodiment, displayed on the display unit 366 of the environmental load calculation server 102. The environmental load calculation screens may also be displayed on the LCD panel 208 of the printer 105. The settings selected on the display screen related to the environmental load calculation are stored in the HDD 363 of the environmental load calculation server 102.

Fig. 10A is a diagram illustrating the detailed calculation result screen 1000 according to this embodiment. The detailed calculation result screen 1000 includes the Divide button 1001 in addition to the screen layout illustrated in Fig. 4B. The Divide button 1001 (division unit) is a button for instructing the process of dividing the calculation result displayed on the detailed calculation result screen 1000. When the Divide button 1001 is pressed, the screen transitions to the calculation result division screen 1010 illustrated in Fig. 10B.

On the calculation result division screen 1010 illustrated in Fig. 10B, settings are made to divide the calculation result of the job displayed in Fig. 10A into two separate calculation results. The calculation result division screen 1010 includes pre-division information, post-division settings, an Execute Division button 1020, and a Cancel button 1021.

The pre-division information includes a pre-division job name 1011, pre-division copy count (number of copies) 1012, and pre-division total CO₂ emissions 1013.

The post-division settings include post-division job names 1014 and 1015, job copy counts (number of copies) 1016 and 1017, and total CO₂ emissions 1018 and 1019 corresponding to the respective jobs.

In the pre-division information, the name of the job displayed before transitioning to the calculation result division screen 1010 is displayed as the pre-division job name 1011. In addition, the number of copies and the total CO₂ emissions are displayed as the pre-division copy count 1012 and the pre-division total CO₂ emissions 1013, respectively.

In the post-division settings, the job name corresponding to one of the post-division jobs is displayed as the post-division job name 1014, and the job name corresponding to the other post-division job is displayed as the post-division job name 1015. By selecting each job name field, an arbitrary character string can be entered and set. When the screen is displayed, the same job name as that displayed as the pre-division job name 1011 may be initially displayed in the job name field.

The job copy counts 1016 and 1017 may each be set to indicate the number of copies (number of prints) for one of the post-division jobs. The values of the job copy counts 1016 and 1017 can only be set by the user within a range in which their sum (Σ(Nbₙ) (n = 1 to N)) is equal to or less than the pre-division copy count 1012 (number of prints Na). When a value is entered in a field for either the job copy count 1016 or 1017, the remaining value obtained by subtracting the entered value from the pre-division copy count 1012 is automatically entered in the other field. For example, when the pre-division copy count is 280 and "160" is entered in the field for the job copy count 1016, the remaining number of copies, 120, is calculated and automatically entered in the field for the job copy count 1017. In addition, the value of the pre-division copy count 1012 may be displayed next to each of the job copy counts 1016 and 1017 to make it easier to compare them with the pre-division value. The total CO₂ emissions 1018 and 1019 each represent the total CO₂ emissions for one of the post-division jobs. These values are calculated based on the pre-division total CO₂ emissions 1013, the pre-division copy count 1012, and the job copy counts 1016 and 1017, and are entered as the total CO₂ emissions corresponding to the respective jobs. For example, assume that the pre-division copy count is 280, the total CO₂ emission amount is 140 kg-CO₂eq, and the job copy count 1016 of Job 1, which is one of the post-division jobs, is set to 160 copies (number of prints Nbm). In this case, the total CO₂ emissions for Job 1 is calculated as 140 × (160 ÷ 280) = 80, and the calculation result is displayed as the total CO₂ emissions 1018.

The Execute Division button 1020 is a button for executing the division according to the division settings made by the user. When the Execute Division button 1020 is pressed, the calculation results for the post-division jobs are recorded based on the contents of the post-division job names 1014 and 1015, the job copy counts 1016 and 1017, and the total CO₂ emissions 1018 and 1019, and the pre-division job is deleted. Thereafter, the screen transitions to the calculation result list screen 420. When an instruction is received via the Execute Division button 1020 and any of the post-division job names 1014 and 1015 or any of the job copy counts 1016 and 1017 have no entered value, a warning may be displayed to prompt the user to enter a value for the missing item instead of executing the division process. When the Cancel button 1021 is pressed, the entered items are discarded, and the screen returns to the detailed calculation result screen 1000 displayed before the transition.

Although the case has been described above in which the job displayed on the detailed calculation result screen 1000 illustrated in Fig. 10A is divided into two jobs and the calculation results for the respective jobs are displayed, the job may alternatively be divided into three or more jobs. In this case, the default number of divisions is set to two, and a "+" button (not illustrated) for adding the number of divisions is provided on the calculation result division screen 1010 illustrated in Fig. 10B. When the "+" button is selected, the calculation result division screen 1010 allows the user to set the post-division job name, job copy count, and total CO₂ emissions for a third (m-th) post-division job (Job 3), in the same manner as for Jobs 1 and 2.

According to the embodiments described above, carbon dioxide emissions can be calculated by selecting, from the job history information stored in the environmental load calculation server 102, the jobs required for processing a finished product (deliverable) and performing the calculation. Even in cases where multiple devices (the image forming apparatuses 101a and 101b) connected to the environmental load calculation server 102 and multiple processes contribute to the production of the finished product, the total amount of carbon dioxide emissions generated as a whole can be collectively calculated.

In the above embodiments, the control program for calculating carbon dioxide emissions is executed by the CPU 361 of the environmental load calculation server 102; however, the embodiments are not limited thereto. For example, the job history may be stored in the image forming apparatus 101, and the image forming apparatus 101 that stores the job history may execute the control program.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. An information processing apparatus (102) configured to receive a job history from an image forming apparatus (101) that performs a job to form an image on a recording medium, wherein
the job history includes information on a printing job that has been normally completed and information on a related job related to the normally completed printing job,
the information processing apparatus (102) comprising:
a first calculation unit (601) configured to calculate an amount of carbon dioxide emissions generated when the normally completed printing job is performed;
a second calculation unit (601) configured to calculate an amount of carbon dioxide emissions generated when the related job is performed;
an addition unit (361) configured to add up the amounts of carbon dioxide emissions calculated by the first calculation unit (601) and the second calculation unit (601); and
a storage unit (363) configured to store a sum of the amounts obtained by the addition unit (361) as a total amount of carbon dioxide emissions associated with the normally completed printing job.

2. The information processing apparatus (102) according to claim 1, wherein the related job includes an adjustment job that performs adjustment printing of the image forming apparatus (101) for performing the normally completed printing job, and an error job that was performed with the same print settings as the normally completed printing job but was determined to have failed and terminated.

3. The information processing apparatus (102) according to claim 1 or 2, wherein the information processing apparatus (102) is communicatively connected to a plurality of image forming apparatuses (101a, 101b) including the image forming apparatus (101) and is configured to acquire the related job from the job history received from the same image forming apparatus (101) from which the normally completed printing job has been received.

4. The information processing apparatus (102) according to any one of claims 1 to 3, wherein the related job is extracted from among jobs within a predetermined period from a print end time of the normally completed printing job in the job history.

5. The information processing apparatus (102) according to claim 4, wherein a job having the same print settings as those of the normally completed printing job is extracted from the job history as the related job.

6. The information processing apparatus (102) according to claim 4, wherein, among adjustment jobs included in the job history, a job having the same media settings as those of the normally completed printing job is extracted as the related job.

7. The information processing apparatus (102) according to any one of claims 1 to 6, wherein
the image forming apparatus (101) includes a finisher (109) configured to perform post-processing on the recording medium on which the image has been formed, the post-processing including at least one of stapling, binding, and cutting,
the information on the normally completed printing job includes information regarding the post-processing,
an amount of carbon dioxide emissions generated when the post-processing is performed is calculated, and
the calculated amount of carbon dioxide emissions is added to the total amount of carbon dioxide emissions associated with the normally completed printing job.

8. The information processing apparatus (102) according to any one of claims 1 to 7, wherein
the image forming apparatus (101) includes an inserter (106) configured to perform post-processing to insert a second recording medium, on which another image has been formed, to the recording medium on which the image has been formed,
the information on the normally completed printing job includes information regarding the post-processing, including device information indicating whether a device that has formed the other image on the second recording medium is the image forming apparatus (101) or another device, and setting information used when the post-processing is performed,
an amount of carbon dioxide emissions generated when the post-processing is performed is calculated, and
the calculated amount of carbon dioxide emissions is added to the total amount of carbon dioxide emissions associated with the normally completed printing job.

9. The information processing apparatus (102) according to claim 8, wherein the device information is input by a user.

10. The information processing apparatus (102) according to any one of claims 1 to 9, further comprising a division unit (1001) configured to divide the normally completed printing job into a plurality of printing jobs, wherein
the division unit (1001) divides the normally completed printing job according to the number of prints for each of the plurality of printing jobs set by a user within a range in which a sum of the numbers of prints of the plurality of printing jobs, represented by Σ(Nbn) (n = 1 to N), is equal to or less than the number of prints Na of the normally completed printing job, and
a total amount of carbon dioxide emissions for an m-th (1 ≤ m ≤ N) printing job among the plurality of printing jobs is calculated based on the total amount of carbon dioxide emissions associated with the normally completed printing job, the number of prints Na, and the number of prints Nbm.

11. An image forming apparatus (101) configured to perform a job to form an image on a recording medium and store a history of the job, wherein
the history includes information on a printing job that has been normally completed and information on a related job related to the normally completed printing job,
the image forming apparatus (101) comprising:
a first calculation unit configured to calculate an amount of carbon dioxide emissions generated when the normally completed printing job is performed;
a second calculation unit configured to calculate an amount of carbon dioxide emissions generated when the related job is performed;
an addition unit configured to add up the amounts of carbon dioxide emissions calculated by the first calculation unit and the second calculation unit; and
a storage unit configured to store a sum of the amounts obtained by the addition unit as a total amount of carbon dioxide emissions associated with the normally completed printing job.

12. A control method for an information processing apparatus (102) configured to receive a job history from an image forming apparatus (101) that performs a job to form an image on a recording medium, wherein
the job history includes information on a printing job that has been normally completed and information on a related job related to the normally completed printing job,
the control method comprising:
calculating (S806) a first amount of carbon dioxide emissions generated when the normally completed printing job is performed;
calculating (S806) a second amount of carbon dioxide emissions generated when the related job is performed;
adding up (S808) the first amount of carbon dioxide emissions and the second amount of carbon dioxide emissions; and
storing (S809) a sum of the first amount and the second amount as a total amount of carbon dioxide emissions associated with the normally completed printing job.

13. A control method for an image forming apparatus (101) configured to perform a job to form an image on a recording medium and store a history of the job, wherein
the history includes information on a printing job that has been normally completed and information on a related job related to the normally completed printing job,
the control method comprising:
calculating (S806) a first amount of carbon dioxide emissions generated when the normally completed printing job is performed;
calculating (S806) a second amount of carbon dioxide emissions generated when the related job is performed;
adding up (S808) the first amount of carbon dioxide emissions and the second amount of carbon dioxide emissions; and
storing (S809) a sum of the first amount and the second amount as a total amount of carbon dioxide emissions associated with the normally completed printing job.

14. A computer program comprising instructions which, when the program is executed by a computer, cause the computer to function as the information processing apparatus (102) according to claim 1.

15. A computer program comprising instructions which, when the program is executed by a computer, cause the computer to function as the image forming apparatus (101) according to claim 11.
